# EUROPÄISCHE PATENTSCHRIFT

(11) **EP 3 417 190 B1**
(45) Veröffentlichungstag und Bekanntmachung des Hinweises auf die Patenterteilung: **19.08.2020**
(21) Anmeldenummer: 17703939.3
(22) Anmeldetag: 02.02.2017
(51) Int. Cl.: F16H 57/04, F16H 61/00

(54) **DRUCKÖLFILTERSYSTEM FÜR EIN HYDRAULIKGETRIEBE**
HYDRAULIC OIL FILTER SYSTEM FOR A HYDRAULIC TRANSMISSION
SYSTÈME DE FILTRE À HUILE SOUS PRESSION POUR UNE TRANSMISSION HYDRAULIQUE

(30) Priorität: 19.02.2016 DE 102016202625
(43) Veröffentlichungstag der Anmeldung: 26.12.2018
(73) Patentinhaber: IBS Filtran Kunststoff-/Metallerzeugnisse GmbH, 51597 Morsbach (DE)
(72) Erfinder: STAUSBERG, Wolfgang, 51579 Morsbach (DE)
(74) Vertreter: Richly & Ritschel Patentanwälte PartG mbB
(86) Internationale Anmeldenummer: PCT/EP2017/052190
(87) Internationale Veröffentlichungsnummer: WO 2017/140503

(56) Entgegenhaltungen:
- DE-A1- 19 942 543
- DE-A1-102008 040 667
- DE-A1-102008 040 667
- US-A1- 2012 061 184
- US-A1- 2012 061 184

## Beschreibung

Die Erfindung betrifft ein Druckölfiltersystem für ein Hydraulikgetriebe, für eine hydraulische Steuereinrichtung oder für den Ölkreislauf einer Brennkraftmaschine .

In Kraftfahrzeuggetrieben finden zunehmend elektrisch betriebene Ölpumpen Anwendung, da diese bedarfsgerechter gesteuert werden können, um so den Wirkungsgrad des Getriebes zu verbessern.

Darüber hinaus ist es erforderlich, bei modernen Kraftfahrzeugen mit Start-Stopp-Automatik auch bei Stillstand der Brennkraftmaschine den Getriebeölkreislauf aufrecht zu erhalten.

Weiterhin kann der Arbeitsteil eines Druckölsystems an Kraftfahrzeuggetrieben hydraulische Betätigungselemente eines Kraftfahrzeuges, Steuerzylinder etc. umfassen, welche mit einem bestimmten konstanten Druck gespeist werden müssen.

Üblicherweise umfassen Druckölsysteme druckseitig der Ölpumpe bzw. der Ölförderpumpe Ölfilter, welche bei kontinuierlicher Durchströmung den Ölstrom abreinigen und feine Partikel aus dem Ölstrom aushalten. Dabei sinkt die Anzahl der Feinpartikel im Ölvolumenstrom über die Zeit einer kontinuierlichen Betriebsdauer des Systems.

Bei Kraftfahrzeugen mit Start-Stopp-Automatik sind Druckölsysteme vorgesehen, die eine elektrisch zuschaltbare Ölpumpe umfassen. Bei Start-Stopp-Betrieb des Kraftfahrzeuges erfolgt eine pulsartige Zuschaltung der elektrischen Ölpumpe, was notwendig ist, um entsprechend rechtzeitig den Betriebsdruck des Getriebeöls aufrecht zu erhalten. Versuche mit solchen Druckölsystemen haben gezeigt, dass bei einer kontinuierlichen Filtration des Getriebeöls die Anzahl der im Öl suspendierten Partikel auch kontinuierlich abnimmt, so dass über die Betriebszeit der Brennkraftmaschine eine zufriedenstellende Abreinigung des Ölvolumenstroms erreicht wird.
Es hat sich allerdings herausgestellt, dass bei Start-Stopp-Betrieb des Fahrzeuges und damit bei intermittierendem Betrieb der elektrisch zuschaltbaren Ölpumpe, die einen schnellen Druckanstieg und eine sprunghafte Erhöhung des Ölvolumenstroms bewirkt, ein deutlicher Anstieg der Partikelanzahl im Ölvolumenstrom zu verzeichnen war.
Dem kann grundsätzlich durch eine mehrstufige und/oder feinere Ölfiltration entgegengewirkt werden. Die Verwendung eines feineren Filtermediums hat allerdings den Nachteil, dass das Ölfilter größere Druckverluste im System erzeugt. DE 199 42 543 A1 beschreibt eine Fluidkühlvorrichtung mit in einer Baueinheit zusammengefasster Kühl-, Filter- und Pumpeneinrichtung, wobei in einem Fluidkreislauf von der Pumpeneinrichtung gefördertes Fluid von der Filtereinrichtung filterbar und von der Kühleinrichtung kühlbar ist und wobei die Filtereinrichtung mindestens ein bei ihrer Verschmutzung auswechselbares Filterelement aufweist, wobei für einen Austausch des jeweiligen Filterelementes im Fluidkreislauf eine ansteuerbare Absperreinheit vorhanden ist, mit der die Filtereinrichtung von der Pumpeneinrichtung derart abtrennbar ist, dass die Kühleinrichtung weiter mit dem zu kühlenden Fluid versorgt ist.
Der Erfindung liegt daher die Aufgabe zugrunde, ein Druckölfiltersystem der eingangs genannten Art bereitzustellen, das trotz intermittierendem Betrieb einer elektrisch zuschaltbaren Ölpumpe eine effektive Fein- und Feinstfiltration des Ölvolumenstroms ermöglicht.
Die Aufgabe wird gelöst mit den Merkmalen des Anspruchs 1. Vorteilhafte Ausgestaltungen der Erfindung ergeben sich aus den Unteransprüchen.
Nach einem Gesichtspunkt der Erfindung ist ein Druckölfiltersystem für ein Hydraulikgetriebe, für eine hydraulische Steuereinrichtung oder für den Ölkreislauf einer Brennkraftmaschine, umfassend wenigstens eine bedarfsweise zuschaltbare Ölpumpe , die eine Druckseite und eine Saugseite aufweist, eine Druckleitung zu einem Verbraucher und mindestens ein auf der Druckseite der Ölpumpe in der Druckleitung angeordnetes erstes Ölfilter, wobei in der Druckleitung in Strömungsrichtung des Öls vor dem ersten Ölfilter Mittel zur Dämpfung von Druckstößen bei einem intermittierenden Betrieb der Ölpumpe vorgesehen sind, wobei in der Druckleitung eine Überbrückungsleitung des ersten Ölfilters vorgesehen ist, wobei wenigstens ein erstes Druckventil in Strömungsrichtung des Öls vor dem ersten Ölfilter und hinter einer Abzweigung der Überbrückungsleitung angeordnet ist, wobei mindestens ein zweites Druckventil in der Überbrückungsleitung angeordnet ist, wobei das erste Druckventil eine träge Öffnungscharakteristik und das zweite Druckventil eine flinke Öffnungscharakteristik aufweist, wobei das erste Druckventil als gedämpftes Rückschlagventil ausgebildet ist und wobei das zweite Druckventil als ungedämpftes Rückschlagventil ausgebildet ist.
Der hier verwendete Begriff "Öl" ist grundsätzlich so zu verstehen, dass hierunter im Allgemeinen Hydraulikflüssigkeiten und insbesondere Getriebeöl-Fluide zu verstehen sind, die auch als sogenannte "ATF-Getriebeöle" bekannt sind.
Der Erfindung liegt die Erkenntnis zugrunde, dass bei einer pulsartigen Zuschaltung der elektrischen Ölpumpe beim Betrieb einer Start-Stopp-Automatik eines Kraftfahrzeuges ein stark ausgeprägtes Ausspülen der von dem Ölfilter aufgenommenen Partikel auftritt. Eine solche pulsartige Zuschaltung der elektrischen Ölpumpe ist notwendig, um etwa zeitgleich mit dem Abschalten der Brennkraftmaschine den für das Getriebe erforderlichen Betriebsdruck zu erzeugen.
Die Anmelderin hat in einem Versuchsaufbau das Ausspülverhalten verschiedener Filteraufbauten untersucht. Dabei wurde zunächst ein Abreinigen des Ölvolumenstroms bei kontinuierlicher Durchströmung des ersten Ölfilters beobachtet. Über die Betriebszeit der Brennkraftmaschine bzw. über die Dauer der Ölfiltration bei einem konstanten Volumenstrom erfolgt dabei eine kontinuierliche Abnahme der Feinpartikel im Ölvolumenstrom. Bei einer Umschaltung auf den sogenannten Pulsbetrieb, das heißt bei intermittierendem Betrieb einer zuschaltbaren Ölpumpe, war dahingegen ein deutlicher Anstieg der Partikelanzahl im Ölvolumenstrom zu verzeichnen. Dieses Phänomen ist nach Erkenntnissen der Anmelderin darauf zurückzuführen, dass die durch die Zuschaltung der Ölpumpe erzeugten Druckstöße auf das Ölfilter einhergehend mit einer hohen Beschleunigung des Ölvolumenstroms bewirken, dass die Druckstöße, die auf dem Filtermedium abgelagerten Partikel wieder mobilisieren. Dieses Phänomen hat zur Folge, dass bei verhältnismäßig kurzen Abständen zwischen den Druckstößen ein Teil der feinen und feinsten im Ölvolumenstrom enthaltenen Partikel nicht mehr abgereinigt wird und in der Schwebe gehalten wird.

Die Pulsbelastung des ersten Ölfilters bzw. des Filtermediums wird dadurch verringert, dass in der Druckleitung in Strömungsrichtung des Öls vor dem ersten Ölfilter Mittel zur Dämpfung von Druckstößen vorgesehen sind.

Überraschenderweise hat sich herausgestellt, dass dadurch in der Tat ein Anstieg der Partikelanzahl im Ölvolumenstrom bei intermittierendem Betrieb einer elektrischen Ölpumpe verringert werden kann, so dass insgesamt geringere Ölreinheitsklassen erzielt werden.

Das ist insbesondere vor dem Hintergrund wichtig, das in Kraftfahrzeugen eine zunehmend komplexere Mechatronik verbaut wird, die höhere Anforderungen an die Reinheit des Ölvolumenstroms stellt.

Die zuvor geschilderte Problematik und die erfindungsgemäß in diesem Zusammenhang vorgeschlagene Lösung betrifft ganz allgemein auch hydraulische Steuerungen und Getriebe für andere Anwendungen.

Mittels des ersten in einer Druckleitung zum ersten Ölfilter angeordneten Druckventils wird in vorteilhafter Art und Weise eine Dämpfung von Druckstößen bewirkt. Um dem Verbraucher trotz der Dämpfung einen konstanten Ölvolumenstrom zuführen zu können, ist erfindungsgemäß vorgesehen, eine Überbrückungsleitung für das erste Ölfilter vorzusehen, in welcher ein zweites verhältnismäßig flink öffnendes Druckventil angeordnet ist. Ein Teil des Druckimpulses wird so über die Überbrückungsleitung weitergegeben, so dass ein geringfügiger Anteil des Ölvolumenstroms an dem ersten Ölfilter vorbeigeführt wird. Versuche mit der erfindungsgemäßen Anordnung haben bestätigt, dass mit dieser Anordnung kleinere Ölreinheitsklassen (DIN ISO 4406/99) zu erzielen sind als bei ungedämpftem intermittierendem Betrieb der Ölpumpe.

Erfindungsgemäß ist in der direkten Zuleitung des ersten
Ölfilters ein Puls-Schutz-Ventil als erstes Druckventil vorgesehen, das so ausgelegt ist, dass der durch die Zuschaltung der Ölpumpe erzeugte Druckstrom unmittelbar vor dem Öffnen des Ventilkörpers bereits abgebaut ist. Das zweite Druckventil in der Überbrückungsleitung ist hingegen als schnell reagierendes Ventil ausgelegt, so dass der durch die Zuschaltung der Ölpumpe erzeugte Druckstoß über die Überbrückungsleitung abgeleitet wird.

Beide Druckventile können beispielsweise für einen Öffnungsdruck zwischen 0,5 und 1 bar ausgelegt sein.

Bei einer zweckmäßigen Variante des Druckölfiltersystems gemäß der Erfindung ist vorgesehen, dass der Öffnungsdruck des ersten Druckventils kleiner oder gleich dem Öffnungsdruck des zweiten Druckventils ist.

Zweckmäßigerweise ist die Dämpfungscharakteristik des ersten Druckventils einstellbar, so dass das Druckölsystem je nach Anwendungsfall auslegbar ist. Das erste Druckventil kann beispielsweise hydraulisch oder mechanisch gedämpft sein. Eine hydraulische Dämpfung kann beispielsweise über einen mit dem Ventilkörper verbundenen Kolben bewirkt werden, der ein Volumen in einen Ausgleichsbehälter verdrängt.

Wenn das erste Druckventil mit einem federbelasteten, in der geschlossenen Stellung gehaltenen Ventilkörper ausgebildet ist, kann die Dämpfungscharakteristik über die Eigenschaft der Feder vorgegeben sein. Die Feder kann eine lineare, progressive oder degressive Federkennlinie aufweisen.

Das Druckölfiltersystem kann beispielsweise ein Ölreservoir, eine zuschaltbare vorzugsweise elektrische Ölpumpe sowie einen Verbraucher in Form von einer hydraulischen Steuereinheit oder eines Getriebes umfassen.

Das Druckölfiltersystem umfasst zweckmäßigerweise ein Ölreservoir, eine Druckleitung zu dem Verbraucher, die druckseitig an die Ölpumpe angeschlossen ist, eine Überbrückungsleitung/Bypassleitung sowie eine Rücklaufleitung in das Ölreservoir.

Ein weiterer Gesichtspunkt der Erfindung betrifft ein Kraftfahrzeuggetriebe mit einem Druckölfiltersystem gemäß der Erfindung.
Figur 1 eine graphische Darstellung der Partikelanzahl von Partikeln im Ölvolumenstrom, aufgetragen über das filtrierte Ölvolumen bei kontinuierlicher Förderung des Ölvolumenstroms sowie bei gepulster Förderung des Ölvolumenstroms
Figur 2 eine der Figur 1 entsprechende Darstellung, wobei die Ölreinheitsklassen nach DIN ISO über das filtrierte Ölvolumen aufgetragen sind.
Figur 3 ein Hydraulikschaltbild eines Druckölfiltrationssystems gemäß der Erfindung und
Figur 4 ein schematische Darstellung des Druckverlaufs des Druckölvolumenstroms aufgetragen über die Zeit sowohl für einen ideal ungedämpften Druckanstieg sowie für verschiedenen Dämpfungscharakteristika.

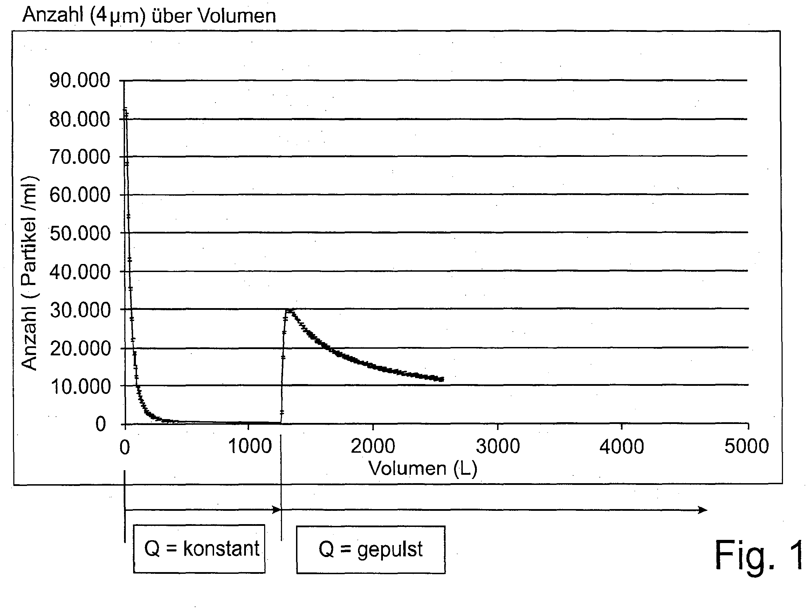

Es wird zunächst Bezug genommen auf die Darstellung in Figur 1, die das Ergebnis eines simulierten Pulsbetriebes eines Druckölfiltrationssystems mit einer elektrisch zuschaltbaren Ölpumpe darstellt. Aufgetragen sind die Anzahl der Partikel im Ölvolumenstrom mit einem Durchmesser von circa 4 µm über den filtrierten Volumenstrom, das heißt im Ergebnis über die Filtrationsdauer. Wie dem in Figur 1 dargestellte Graphen zu entnehmen ist, ist zunächst ein konstanter Betrieb einer Ölpumpe über einem konstanten Ölvolumenstrom bis zu einem Gesamtvolumen von etwa 1.200 l vorgesehen. Sodann wird eine elektrisch betriebene Ölpumpe zugeschaltet, was einen Druckstoß innerhalb des Systems bewirkt. Die elektrische Ölpumpe ist dem ersten Ölfilter vorgeschaltet. Die Zuschaltung der elektrischen Ölpumpe bewirkt einen schlagartigen Anstieg der Partikelanzahl im Ölvolumenstrom und eine darauffolgend langsamere Verringerung der Partikelanzahl im Ölvolumenstrom. Weitere Schaltvorgänge der intermittierend betriebenen elektrischen Ölpumpe sind in dem Graphen nicht dargestellt.

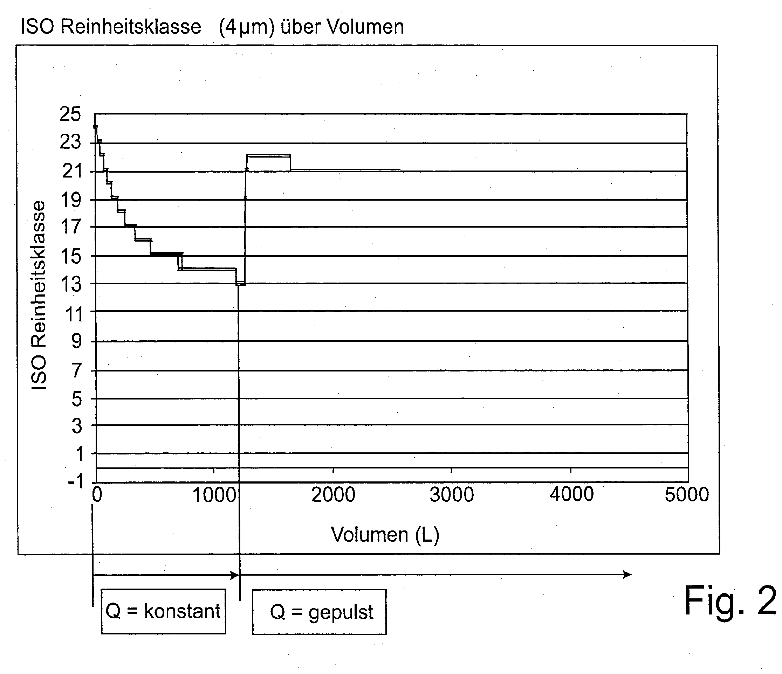

Figur 2 zeigt die gleiche Simulation, wobei jedoch anstelle der Anzahl der Partikel, bezogen auf das umgewälzte Ölvolumen, die betreffende DIN- ISO-Reinheitsklasse aufgetragen ist.

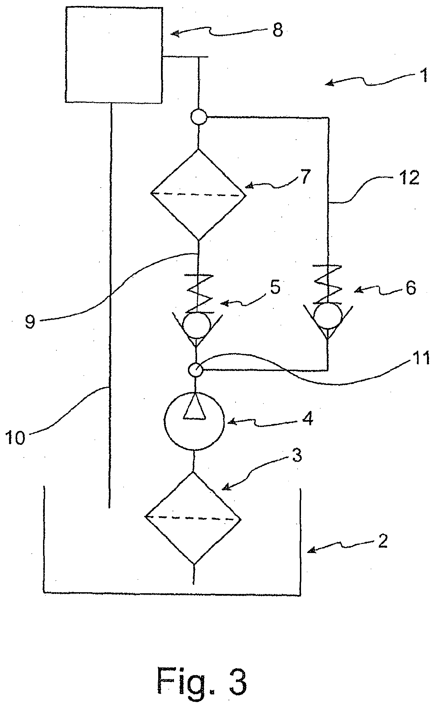

Es wird nun Bezug genommen auf Figur 3, die einen Hydraulikplan des Druckölfiltersystems 1 gemäß der Erfindung zeigt. Das Druckölfiltersystem 1 gemäß der Erfindung umfasst ein Ölreservoir 2, aus welchem eine Ölpumpe 4, die vorzugsweise als elektrische Ölpumpe ausgebildet ist, Hydraulikflüssigkeit, beispielsweise Hydrauliköl, ansaugt. Die Ölpumpe 4 befördert das Öl über eine Druckleitung 9 zu einem Verbraucher 8, beispielsweise in Form einer Steuereinheit eines Hydraulikgetriebes, beispielsweise eines Kraftfahrzeuggetriebes.

Über eine Rücklaufleitung 10 wird das Öl in das Ölreservoir 2 zurückgefördert.

Die in dem Hydraulikplan dargestellte Ölpumpe 4 ist als zusätzliche, zuschaltbare Ölpumpe vorgesehen.

Ist der Verbraucher beispielsweise ein Kraftfahrzeuggetriebe bzw. eine Steuereinheit eines Kraftfahrzeuggetriebes, wird der Ölumlauf zusätzlich über eine von der Brennkraftmaschine getriebene Ölpumpe bewirkt.

Durch die Zuschaltung der Ölpumpe 4, die beispielsweise in der Druckleitung einen Ölförderdruck zwischen 4 und 6 Bar bewirken kann, wird in der Druckleitung 9 ein Druckstoß und ein sprunghafter Volumenanstieg induziert, der auf ein in der Druckleitung 9 vorgesehenes erstes Ölfilter 7 wirkt. Als erstes Ölfilter in diesem Sinne wird eine Ölfilteranordnung mit einem oder mehreren Filtermedien bezeichnet.

Um zu verhindern, dass der durch die Zuschaltung der Ölpumpe 4 in der Druckleitung 9 induzierte Druckstoß ein Ausspülen des ersten Ölfilters 7 bewirkt, ist erfindungsgemäß eine sogenannte Puls-Schutz-Ventilschaltung vorgesehen, die ein erstes Druckventil 5 und ein zweites Druckventil 6 umfasst. Das erste Druckventil 5 ist in Strömungsrichtung des Öls vor dem ersten Ölfilter 7 und hinter einer Abzweigung 11 einer Überbrückungsleitung 12 des ersten Ölfilters 7 angeordnet. Bei dem dargestellten Ausführungsbeispiel sind sowohl das erst Druckventil 5 als auch das zweite Druckventil 6 als federbelastete Rückschlagventile ausgebildet, wobei das erste Druckventil 5 träge öffnend ausgebildet ist und das zweite Druckventil 6 flink öffnend bzw. schnell öffnend ausgebildet ist. Das erste Druckventil 5 öffnet bei einem Öffnungsdruck zwischen 0,5 und 1 bar und ist als gedämpftes Rückschlagventil ausgebildet, wohingegen das zweite Druckventil 6 ebenfalls bei einem Druck zwischen 0,5 und 1 bar öffnet und im Wesentlichen ungedämpft ist.

Bei einem durch die Ölpumpe 4 induzierten Druckstoß in der Druckleitung 9 öffnet das erste Druckventil 5 verzögert, wohingegen das zweite Druckventil 6 den Druckstoß durchlässt. Dieser Druckstoß wird über die Überbrückungsleitung 12 an dem ersten Ölfilter 7 vorbeigeführt, so dass der erzeugte Puls nicht unmittelbar auf das in dem ersten Ölfilter 7 vorgesehene Filtermedium einwirkt.

Der Saugseite der Ölpumpe 4 ist im Falle des dargestellten Ausführungsbeispiels noch ein Saugfilter 3 als zweites Ölfilter vorgeschaltet.

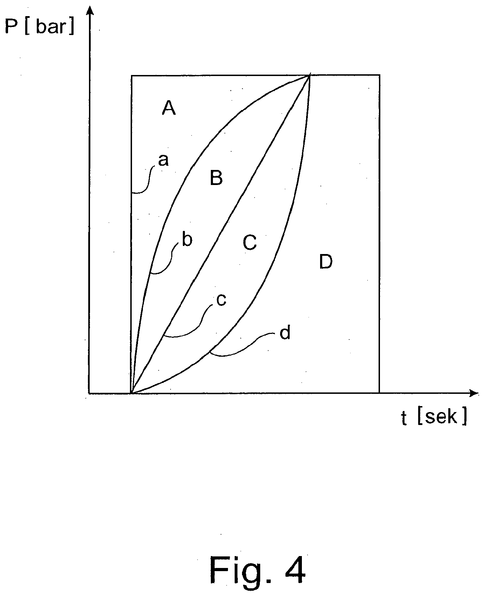

Es wird nunmehr Bezug genommen auf Figur 4, die verschiedene Druckverläufe in der Druckleitung 9 für verschiedene Dämpfungscharakteristika veranschaulicht.

Der mit a) gekennzeichnete Druckverlauf ist ein ideal ungedämpfter Druckstoß, der einen rechteckigen Graphen erzeugt. Die Druckverläufe b), c) und d) zeigen jeweils einen unterschiedlichen Verlauf entsprechend der eingestellten Dämpfungscharakteristik des ersten Druckventils 5. Dabei verläuft jeweils die Flanke des Druckanstiegs anders, der Teil der Kurven, der einen konstanten Druck und einen anschließenden Druckabfall zeigt, ist für alle Ventilcharakteristika gleich.

Die Öffnungscharakteristik des ersten Druckventils kann sowohl über eine hydraulische Dämpfung des Ventilkörpers als auch mechanisch beeinflusst sein. Die in Figur 4 dargestellten Kurven b), c) und d) zeigen jeweils Druckanstiegskurven, beispielsweise für eine progressive, lineare oder degressive Federkennlinie der Feder des ersten Druckventils 5.

### Bezugszeichenliste:

- 1: Druckölfiltersystem
- 2: Ölreservoir
- 3: zweites Ölfilter
- 4: Ölpumpe
- 5: erstes Druckventil
- 6: zweites Druckventil
- 7: erstes Ölfilter
- 8: Verbraucher
- 9: Druckleitung
- 10: Rücklaufleitung
- 11: Abzweigung
- 12: Überbrückungsleitung

## Patentansprüche

1. Druckölfiltersystem (1) für ein Hydraulikgetriebe, für eine hydraulische Steuereinrichtung oder für den Ölkreislauf einer Brennkraftmaschine, umfassend wenigstens eine bedarfsweise zuschaltbare Ölpumpe (4), die eine Druckseite und eine Saugseite aufweist, eine Druckleitung (9) zu einem Verbraucher (8) und mindestens ein auf der Druckseite der Ölpumpe (4) in der Druckleitung 9 angeordnetes erstes Ölfilter (7), wobei in der Druckleitung (9) in Strömungsrichtung des Öls vor dem ersten Ölfilter (7) Mittel zur Dämpfung von Druckstößen bei einem intermittierenden Betrieb der Ölpumpe (4) vorgesehen sind, wobei in der Druckleitung (9) eine Überbrückungsleitung (12) des ersten Ölfilters (7) vorgesehen ist, wobei wenigstens ein erstes Druckventil (5) in Strömungsrichtung des Öls vor dem ersten Ölfilter (7) und hinter einer Abzweigung (11) der Überbrückungsleitung (12) angeordnet ist, wobei mindestens ein zweites Druckventil (6) in der Überbrückungsleitung (12) angeordnet ist, **dadurch gekennzeichnet, dass** das erste Druckventil (5) eine träge Öffnungscharakteristik und das zweite Druckventil eine flinke Öffnungscharakteristik aufweist, wobei das erste Druckventil (5) als gedämpftes Rückschlagventil ausgebildet ist und wobei das zweite Druckventil (6) als ungedämpftes Rückschlagventil ausgebildet ist.

2. Druckölfiltersystem (1) nach Anspruch 1, **dadurch gekennzeichnet, dass** der Öffnungsdruck des ersten Druckventils (5) kleiner oder gleich dem Öffnungsdruck des zweiten Druckventils (6) ist.

3. Druckölfiltersystem (1) nach Anspruch 1 oder 2, **dadurch gekennzeichnet, dass** die Dämpfungscharakteristik des ersten Druckventils (5) einstellbar ist.

4. Druckölfiltersystem (1) nach einem der Ansprüche 1-3, **dadurch gekennzeichnet, dass** das erste Druckventil (5) hydraulisch oder mechanisch gedämpft ist.

5. Kraftfahrzeuggetriebe mit einem Druckölfiltersystem mit den Merkmalen eines der Ansprüche 1-4.

## Claims

1. Hydraulic oil filter system (1) for a hydraulic transmission, for a hydraulic control device or for the oil circuit of an internal combustion engine, comprising at least one oil pump (4) which can be switched on as required and has a pressure side and a suction side, a pressure line (9) to a consumer (8) and at least one first oil filter (7) arranged in the pressure line (9) on the pressure side of the oil pump (4), wherein means being provided in the pressure line (9) upstream of the first oil filter (7) in the direction of flow of the oil for damping pressure impacts during intermittent operation of the oil pump (4), wherein a bypass line (12) of the first oil filter (7) is provided in the pressure line (9), wherein at least one first pressure valve (5) is arranged upstream of the first oil filter (7) and downstream of a branch (11) of the bypass line (12) in the flow direction of the oil, wherein at least one second pressure valve (6) is arranged in the bypass line (12), **characterized in that** the first pressure valve (5) has a inert opening characteristic and the second pressure valve has a agile opening characteristic, wherein the first pressure valve (5) is formed as a damped check valve and wherein the second pressure valve (6) is formed as an undamped check valve.

2. Hydraulic oil filter system (1) according to claim 1, **characterized in that** the opening pressure of the first pressure valve (5) is less than or equal to the opening pressure of the second pressure valve (6).

3. Hydraulic oil filter system (1) according to claim 1 or 2, **characterized in that** the damping characteristic of the first pressure valve (5) is adjustable.

4. Hydraulic oil filter system (1) according to any one of claims 1-3, **characterized in that** the first pressure valve (5) is hydraulically or mechanically damped.

5. Motor vehicle transmission with a hydraulic oil filter system with the features of any one of the claims 1-4.

## Revendications

1. Système de filtre à huile sous pression (1) destiné à une transmission hydraulique, à un dispositif de commande hydraulique ou au circuit d'huile d'un moteur à combustion interne, comprenant au moins une pompe à huile (4), laquelle peut être activée au besoin et présente un côté pression et un côté aspiration, une conduite sous pression (9) menant à un consommateur (8) et au moins un premier filtre à huile (7) disposé du côté pression de la pompe à huile (4) dans la conduite sous pression (9), des moyens destinés à amortir les coups de bélier pendant un fonctionnement intermittent de la pompe à huile (4) étant prévus dans la conduite sous pression (9) en amont du premier filtre à huile (7) dans le sens d'écoulement de l'huile, une conduite de dérivation (12) du premier filtre à huile (7) étant prévue dans la conduite sous pression (9), au moins une première soupape de pression (5) étant disposée en amont du premier filtre à huile (7) et en aval d'une branche (11) de la conduite de dérivation (12) dans le sens d'écoulement de l'huile, au moins une seconde soupape de pression (6) étant disposée dans la conduite de dérivation (12), **caractérisé en ce que** la première soupape de pression (5) présente une caractéristique d'ouverture lente, et **en ce que** la seconde soupape de pression présente une caractéristique d'ouverture rapide, la première soupape de pression (5) étant conçue sous la forme d'une soupape anti-retour amortie, et la seconde soupape de pression (6) étant conçue sous la forme d'une soupape anti-retour non amortie.

2. Système de filtre à huile sous pression (1) selon la revendication 1, **caractérisé en ce que** la pression d'ouverture de la première soupape de pression (5) est inférieure ou égale à la pression d'ouverture de la seconde soupape de pression (6).

3. Système de filtre à huile sous pression (1) selon la revendication 1 ou 2, **caractérisé en ce que** la caractéristique d'amortissement de la première soupape de pression (5) est réglable.

4. Système de filtre à huile sous pression (1) selon l'une des revendications 1 à 3, **caractérisé en ce que** la première soupape de pression (5) est amortie hydrauliquement ou mécaniquement.

5. Transmission de véhicule automobile présentant un système de filtre à huile sous pression présentant les caractéristiques de l'une des revendications 1 à 4.
